# EUROPEAN PATENT SPECIFICATION

(11) **EP 2 459 659 B1**
(45) Date of publication and mention of the grant of the patent: **17.07.2013**
(21) Application number: 10737728.5
(22) Date of filing: 27.07.2010
(51) Int. Cl.: C09D 7/00, C09D 7/14, C09D 5/16

(54) **REMOVABLE ANTIMICROBIAL COATING COMPOSITIONS CONTAINING CATIONIC RHEOLOGY AGENT AND METHODS OF USE**
ABLÖSBARE ANTIMIKROBIELLE BESCHICHTUNGSZUSAMMENSETZUNGEN MIT KATIONISCHEM RHEOLOGISCHEM ADDITIV UND ANWENDUNGSVERFAHREN
COMPOSITIONS DE REVÊTEMENT ANTIMICROBIENNES, APTES À ÊTRE RETIRÉES, CONTENANT UN AGENT DE RHÉOLOGIE CATIONIQUE, ET PROCÉDÉS D'UTILISATION

(30) Priority: 27.07.2009 US 228707 P; 27.07.2009 US 228711 P; 27.07.2009 US 228715 P; 27.07.2009 US 228723 P; 26.07.2010 US 843120
(43) Date of publication of application: 06.06.2012
(73) Proprietor: E. I. du Pont de Nemours and Company, Wilmington, DE 19898 (US)
(72) Inventor: HOFFMANN, Christian, Newark Delaware 19811 (US); CAHILL, William R., Hockessin Delaware 19707 (US); MALONE, Shaun, F., Ajax Ontario L1T 3X6 (CA); ERKENBRECHER JR, Carl W., Elkton Maryland 21921 (US)
(74) Representative: Dannenberger, Oliver Andre
(86) International application number: PCT/US2010/043382
(87) International publication number: WO 2011/017097

(56) References cited:
- WO-A2-2007/100653
- WO-A2-2007/100654
- Akzo Nobel Surface Chemistry: "Thickening with polymers"[Online] 1 January 2010 (2010-01-01), XP002609717 Akzo Nobel Technical Information Retrieved from the Internet: URL:http://www.akzonobel.com/surface/syste m/images/AkzoNobel_Thickening_with_polymer s_tcm45-37731.pdf> [retrieved on 2010-11-16]
- Ciba Spezialitätenchemie: "Viscosity control in H&FC Formulations with RHEOVIS Polymers"[Online] 1 October 2003 (2003-10-01), pages 1-49, XP002609722 Grenzach Retrieved from the Internet: URL:http://www.google.de/url?q=http://eng. markell.ru/files/file5555.PPT&sa=U&ei=ZXr3 TPDkLsayhAfsy6XIDw&ved=0CA4QFjAA&usg=AFQjC NEKwq0-oQDQzTw2Tqdof55w5ZkNzw> [retrieved on 2010-11-16]

## Description

### FIELD OF THE INVENTION

This disclosure relates to a method for controlling microorganisms comprising coating a surface with a removable, antimicrobial film-forming composition. More specifically, the method relates to removable antimicrobial coating compositions comprising a cationic rheology control agent and methods of applying said compositions.

### BACKGROUND

Microbial infection represents a serious continuing problem in human and animal health. Exposure to microbial pathogens can occur in a variety of settings, such as public facilities and hospitals, and also includes contamination of consumer products and food processing plants, to name a few. Inefficient cleaning of surfaces can lead to cross-contamination. Furthermore, attachment of microorganisms to a surface generates a biofilm on that surface and the microorganisms within a biofilm are known to be less susceptible to disinfectants. It is thus desirable to develop a coating composition that could be applied to a variety of surfaces, and that will control the microbial contamination for a prolonged period of time. It is further desirable to have a removable coating composition that would allow for the ready removal of said coating. Removal of the coating may be required for product quality, or in preparation for a subsequent operation such as painting, or reapplication of the antimicrobial coating composition.

Commonly encountered problems in achieving effective and long lasting control of microbial growth with current and/or commercially available biocidal compositions are: insufficient contact time caused by dripping of the biocidal solution, inefficient surface coverage by nonhomogeneous coating of surfaces, and lack of residual efficacy to protect the surface against fresh contamination.

The commonly owned and co-pending U. S. Patent Applications Nos. 2008/0026026 and 2007/0275101 describe methods for controlling microorganisms comprising coating a surface with a removable, antimicrobial film-forming composition.

Patel et al. in U. S. Patent No. 5,585,407 provide water-based coaling compositions that can be applied to a substrate to inhibit growth of microbes for extended periods of time. The coating comprises an acrylate emulsion polymer and an organoalkoxysilane and can be removed under alkaline conditions.

Asari et al. in U. S. Patent Application Publication 2005/0175568 describe a conditioning composition comprising hydrophobically modified crosslinked cationic thickening polymers.

Richter et al. in U. S. Patent No. 6,025,431 describe thickened personal care compositions comprising an acrylate-based polymeric rheology modifier and a cosmetically active agent.

Kritzler in U. S. Patent Application No. 2008/0138312 describes a method comprising a biostatic polymer composition comprising poly(vinyl alcohol), a quaternary ammonium compound and a surfactant.

Marhevka in U. S. Patent No. 5,017,369 describes a film-forming dairy cow teat sealer for prevention of mastitis comprising polyvinyl alcohol, an antimicrobial agent and water.

Richter et al. in U. S. Patent No. 6,749,869 describe a mastitis control teat dip composition providing rapid initial kill, pseudoplastic rheology, a barrier/film-forming capacity, and long term microbial control.

A drawback of existing removable antimicrobial coating compositions is their lack of providing (i) antimicrobial properties against a broad range of microorganisms, including self-sanitizing activity, combined with (ii) shelf-stability of the liquid coating composition, (iii) fast application to large surface areas to be protected, including the ability to apply by spraying with high delivery-rate spray equipment, (iv) low amounts of coating composition required per surface area, including providing a thin coating and a high transfer efficiency to the target surface, (v) appearance of the coated surface, (vi) complete and easy removal of the coating, and (vii) a simple and fast manufacturing process of the coating composition.

Thus, a need exists for an easily removable, homogeneous antimicrobial coating composition providing both short-term and extended long term antimicrobial efficacy after application to a surface.

### SUMMARY OF THE INVENTION

The present disclosure solves the stated problems by providing control of microorganisms at a locus by contacting said locus with a removable coating composition comprising at least one antimicrobial agent and at least one cationic rheology agent comprising
a) a functional group of a structure 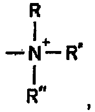 and in particular
b) an acrylic polymer comprising functional groups of a structure chosen from 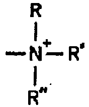 or 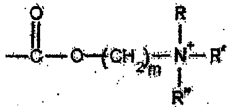
wherein each of R, R' and R" is independently either an alkyl or aryl group, or a combination thereof, and wherein m is 1 to 5.

In an aspect, the disclosure comprises a removable antimicrobial coating composition providing residual self-sanitizing properties comprising:
i. a water soluble or water-dispersible film-forming agent;
ii. at least one cationic or nonionic antimicrobial agent;
iii. an aqueous solvent; and
iv. a cationic rheology agent comprising
   a) a functional group of a structure 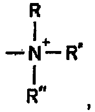 and in particular
   b) an acrylic polymer comprising functional groups of a structure chosen from 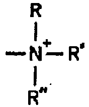 or 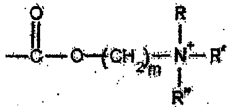
   wherein each of R, R' and R" is independently either an alkyl or aryl group, or a combination thereof, and wherein m is 1 to 5.

In another aspect, the disclosure comprises a method of providing control of microorganisms at a locus comprising the steps:
a) combining:
   i) a water soluble or water-dispersible film-forming agent;
   ii) at least one antimicrobial agent;
   iii) an aqueous solvent;
   iv) a cationic rheology agent comprising
      a) a functional group of a structure 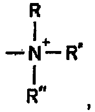 and in particular
      b) an acrylic polymer comprising functional groups of a structure chosen from 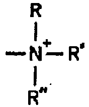 or 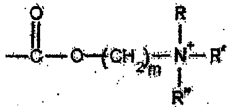
      wherein each of R, R' and R" is independently either an alkyl or aryl group, or a combination thereof, and wherein m is 1 to 5.
   to obtain a shear-thinning removable coating composition;
b) applying said coating composition to said locus, and wherein said coating composition is allowed to form a dry coating after application upon said locus.

### DETAILED DESCRIPTION

Unless stated otherwise, all percentages, parts, ratios, etc., are by weight. Trademarks are shown in upper case. Further, when an amount, concentration, or other value is disclosed as either a range, preferred range or a list of preferred upper and lower values, such disclosure is to have the same effect as if each individual value within the specified range - and any range obtained from a combination of any two individual values within the disclosed range - has been specifically disclosed, even if the individual values are not uniquely or individually disclosed herein. Where a range of numerical values is recited herein, unless otherwise stated, the range is intended to include the endpoints thereof, and all integers and fractions within the range. Unless specified, it is not intended that the scope of the invention be limited to the specific values recited when defining a range.

For clarity, terms used herein are to be understood as described herein or as such term would be understood by one of ordinary skill in the art of the invention. Additional explanation of certain terms used herein, are provided below.

"Removable coating composition" or "coating composition" refers to a film-forming composition comprising a water soluble or water-dispersible film-forming agent, at least one antimicrobial agent, an aqueous solvent and a cationic rheology agent.

"Shear rate" refers to the velocity gradient in a flowing material and is measured in Sl units of reciprocal seconds (s⁻¹).

"Shear-thinning properties" or "pseudoplastic properties" refer to a fluid that exhibits a decrease in viscosity with an increase in shear rate.

"Non-volatile" refers to a compound whose vapor pressure at 25 °C is below 1000 Pascals.

"Metal chelator" or "sequestrant" refers to agents that bind metals or metal-containing impurities.

"Rheology modifier" or "rheology agent" refers to compounds that increase viscosity and/or provide shear-thinning properties to a composition and cause the aqueous treatment or coating composition to cling to the surface of interest.

"wt%" refers to the weight percent relative to the total weight of the solution or dispersion.

"Microorganism" is meant to include any microorganism comprised of the phylogenetic domains of bacteria and archaea, as well as unicellular (e.g., yeasts) and filamentous (e.g., molds) fungi, unicellular and filamentous algae, unicellular and multicellular parasites, viruses, virinos and viroids.

"Film-forming agent" or "water soluble or water dispersible coating agent", which may be used interchangeably herein, refers to agents that form a film and are employed to provide protective coating to the surface of interest. These agents are either water soluble or water dispersible and are described in further detail below.

"Aqueous solvent" refers to water or any other solvent that facilitates application of the water dispersible coating agent and surfactant to the locus. An aqueous solvent may also be employed to rinse coated surfaces to remove the coating as needed.

"Non-aqueous solvent" refers to any solvent that is free of water or contains water in an amount below about 5 wt%, more preferably below about 2 wt%. The non-aqueous solvent may be used to dissolve or disperse the cationic rheology agent.

"Readily removable" refers to easily removing the coatings formed after application of the liquid coating composition to the surface of interest.

"Liquid coating composition" refers to the composition comprising an amount of water soluble or water-dispersible film-forming agent, an antimicrobial agent, an aqueous solvent and a cationic rheology agent.

"Antimicrobial agent" as used herein refers to a compound or substance having antimicrobial properties

"Biocide", as used herein, refers to a chemical agent, typically broad spectrum, which inactivates or destroys microorganisms. A chemical agent that exhibits the ability to inactivate or destroy microorganisms is described as having "biocidal" activity.

"Biofilm" refers to a structured community of microorganisms encapsulated within a self-developed polymeric matrix and adherent to a living or inert surface.

"Drying" refers to a process by which the inert solvent or any other liquid present in the formulation is removed by evaporation.

"Disinfectant" as used herein is a chemical that kills 99.9% of the specific test microorganisms in 10 minutes under the conditions of the test. (Germicidal and Detergent Sanitizing Action of Disinfectants, Official Methods of Analysis of the Association of Official Analytical Chemists, paragraph 960.09 and applicable sections, 15th Edition, 1990; EPA Guideline 91-2).

"Locus" as used herein, comprises part or all of a target surface suitable to be coated.

"Multicompartment system" refers to the means of keeping two or more reactive components of a multicomponent system separated before use comprising at least two compartments.

"Antimicrobial" or "antimicrobial properties" refer to the ability of an agent of killing microorganisms, blocking or preventing microbial contamination (such as a forming a barrier), or suppressing or preventing growth of microorganisms, trapping microorganisms for killing, or preventing biofilm formation.

"Dry" or "essentially dry" refers to a coating composition that has lost at least 70%, more preferably 80%, even more preferably 90%, most preferably more than 95% of the inert solvent as define herein due to evaporation.

"Sag point " refers to the thickness of the coating after spraying on a vertical surface and drying at which the coatings starts to show visual sags or drips.

"Homogeneous" or "substantially homogenous", in this context refers to a coating with only negligible thickness variations across the coating surface.

"Quaternary ammonium compound" refers to a salt of an anion and a quaternary ammonium cation of the structure: 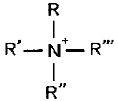 with R, R', R" and R'" being independently either alkyl or aryl groups or any combination thereof.

"Electrical conductivity" is a measure of a material's ability to conduct an electric current and is defined as the ratio of the current density (in Sl units of amperes per square meter) and the applied electric field (in Sl units of volts per meter). An electrical conductivity meter is typically used to measure the electrical conductivity of a solution or liquid.

### Additional terms

For clarity, terms used herein are to be understood as described herein or as such term would be understood by one of ordinary skill in the art of the invention. Additional explanation of certain terms used herein, are provided below:
The antimicrobial coating of the present invention can be used as a sanitizer. As defined herein, a sanitizer is a chemical or chemical mixture that can be either (i) a food-contact sanitizer if the intention is to control microorganisms on surfaces which actually or potentially come in contact with food, or (ii) a non-food-contact sanitizer if the surfaces are not indented to come into contact with food. As defined herein, a food-contact sanitizer kills at least 99.999% of the specific test microorganisms in 30 seconds under the conditions of the test method according to EPA policy DIS/TSS-4: "Efficacy data requirements - Sanitizing rises for previously cleaned food-contact surfaces", United States Environmental Protection Agency, January 30, 1979. A non-food contact sanitizer as defined herein kills at least 99.9% of the specific test microorganisms in 5 minutes under the conditions of the method according to ASTM standard E 1153-03: "Standard Test Method for Efficacy of Sanitizers Recommended for Inanimate Non-Food Contact Surfaces", edition April 10, 2003 and published July 2003.

A coating composition of the present invention can exhibit a residual antimicrobial efficacy, and exhibit self-sanitizing properties. "Residual antimicrobial efficacy" or "self-sanitizing properties" refers to the property of coatings formed as described herein which remain antimicrobially active after drying. The antimicrobial activity of dry coatings can be measured using the residual self-sanitizing (RSS) test as described herein.

A coating of the present invention can be used as a disinfectant. Disinfectant, as defined herein, is a chemical that kills 99.9% of the specific test microorganisms in 10 minutes under the conditions of the test. (Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2)).

Antimicrobial coatings of the present invention are durable coatings. Durable relates to the dried coating matter remaining on the surface until its removal is purposely initiated or allowed to occur. Use conditions are the environmental conditions prevalent during the period the coating remains on the target surface for the application areas of this disclosure and can include inadvertent contact with water of a temperature below about 40 °C.

It can be preferable that the antimicrobial coatings applied to target surfaces be continuous or substantially continuous. Continuous, or substantially continuous, in the context of the present invention refers to a coating that covers the target surface without voids, breaks, uncovered areas, or coating defects that leave unintentionally exposed surface areas.

The coating of the present invention provides a physical barrier. A physical barrier is defined herein as the film formed from the present film forming composition. The resulting film seals the treated surface from contamination from the surrounding, such as soil, fat, dust, microorganisms etc. These contaminants will remain on the surface of the coating and will wash off at the time of removal of the coating.

Contact time refers to the time the coating or coating composition provides antimicrobial properties to microorganisms that come into contact or the vicinity of said coating or coating composition. Depending on the specific requirements for the antimicrobial formulations, the contact time would vary, as set out in "Germicidal and Detergent Sanitizing Action of Disinfectants, Official Methods of Analysis of the Association of Official Analytical Chemists", paragraph 960.09 and applicable sections, 15th Edition, 1990; EPA Guideline 91-2. For example, if the intended application of the present disclosure is use as a sanitizer for food-contact surfaces, then the composition should provide a 99.999% reduction (5-log order reduction) within 30 seconds at room temperature against several test microorganisms. If the intended application is as a sanitizer for non-food contact surfaces, then the composition should provide a 99.9% reduction (3-log order reduction) within 5 minutes at room temperature against several test microorganisms. If the intention is to use the disclosure as a disinfectant, then the composition should provide a 99.9% reduction (3-log order reduction) within 10 minutes. If the intended application is to provide residual antimicrobial activity, then the present method would be allowed to have greater than 10 minute contact time with microorganisms.

Application of an antimicrobial coating composition of the present invention can be effected using a propellant. Propellant refers to a pressurized gas and/or liquid used inside an aerosol can to expel the coating composition from the can. A propellant can be all gas or it can comprise a gas in phase equilibrium with its liquid. In the latter case, as some gas escapes to expel the coating composition, more liquid evaporates, maintaining an even pressure. In some aerosol can designs, the propellant can also be physically separated from the coating composition, such as by a bag inside the can.

The components of the coating composition of the present invention can be contained in a multicompartment containment system, also referred to herein as a multicompartment system. A multicompartment system refers to the means of keeping the two or more reactive components of the multicomponent system coating system separated before use. In one aspect, a multicompartment system comprises at least two compartments and may contain a multi-chamber dispenser bottle or a two-phase system used to combine reactive compounds in liquid form. In another aspect, powders, multi-layered tablets, or water dissolvable packets having multiple compartments, can be used for compounds in solid form or a combination of solid and liquid forms. In another aspect, any kind of system, device, container, package, bag, kit, multi-pack, dispenser, or applicator that is used to keep reactive components separated before use can be used according to the methods of this disclosure.

In one embodiment, the coating composition is generated by mixing a first liquid with a second liquid wherein the first liquid comprises a cationic rheology agent and the second liquid comprises an aqueous solvent.

As such, the components of the coating composition may be provided as a multicomponent system wherein one or more of the components remain separated until use. The design of systems for combining multiple active components are known in the art and generally will depend upon the physical form of the individual components. For example, multiple active fluids (liquid-liquid) systems typically use multi-chamber dispenser bottles or two-phase systems (U. S. Patent Application Pub. No. 2005/0139608; U. S. Patent No. 5,398,846; U. S. Patent No. 5,624,634; U. S. Patent No. 6,391,840; E. P. Patent No. 0807156B1; U. S. Patent Appl. Pub. No. 2005/0008526; and PCT Publication No. WO 00/11713A1) such as those found in some bleaching applications wherein the desired bleaching agent is produced upon mixing the reactive fluids.

In another aspect, a suitable system for combining reactive components is use of a twin-nozzle bottle as disclosed in U. S. Patent Application Pub. No. 2005/014427. An alternative device suitable for use with the method of the invention is a dual compartment trigger-activated fluid dispenser as disclosed in EP Patent No. 0715899B1.

In another aspect, a suitable system for mixing the suitable components may be a container with a membrane separating the components where upon rupturing the membrane by mechanical force, the components are combined before use. In another aspect, a suitable device may be a bag-within-a-bag.

In another aspect, the means for combining or mixing the components of this disclosure include systems, devices, containers, bags, kits, multi-packs, dispensers, and applicators known to those skilled in the art that are used to keep reactive components separated before use.

Pseudoplastic index or shear thinning index (STI) provides a measure on the resistance of the composition to sagging and dripping. The value recorded at the lower shear rate is divided by the value at the higher shear rate to obtain the STI. Generally, the higher the STI, the higher the resistance to sagging and dripping the coating material will have. In this disclosure the shear thinning index is defined as the ratio of the viscosity measured at a first shear rate and a second shear rate, wherein said second shear rate is 10 times the value of said first shear rate. Without being limited to specific first and second shear rates used to calculate the STI, in the Examples said first shear rate was 1 S⁻¹ and said second shear rate was 10 s⁻¹.

There has been a longstanding need for antimicrobial agents having improved antimicrobial efficacy and improved speed of action. The specific requirements for such agents vary according to the intended application (e.g., sanitizer, disinfectant, sterilant, aseptic packaging treatment, etc.) and the applicable public health requirements. For example, as set out in Germicidal and Detergent Sanitizing Action of Disinfectants, Official Methods of Analysis of the Association of Official Analytical Chemists, paragraph 960.09 and applicable sections, 15th Edition, 1990 (EPA Guideline 91-2), a sanitizer should provide a 99.999% reduction (5-log order reduction) within 30 seconds at room temperature (23-27°C), against several test organisms.

The removable antimicrobial coating composition of the present method may be used as a replacement for standard sanitation products (such as diluted quaternary ammonium compound solutions or foams, peracid solutions or foams, and the like), and may be used for daily sanitation as protective coatings for equipment in use or not-in use, as well as for longer term protection, that is, protection over weeks or months).

The removable antimicrobial coating composition of the present method provides several advantages including, but not limited to killing both loose or planktonic microorganisms and microorganisms harbored in biofilms, reducing or preventing the growth of microorganisms by preventing the formation of biofilms and by trapping microorganisms in, beneath or otherwise in contact with the coating.

The coating composition disclosed herein may be modified by formulating the composition with rheology modifiers to coat vertical, inclined, geometrically complex or hard-to-reach surfaces. This enables application of the antimicrobial agent to surfaces on or in equipment otherwise not accessible by application of conventional antimicrobial solutions with traditional shear-viscosity profiles and viscosities below about 0.01 Pascal-seconds at 25°C. Horizontal and vertical surfaces may be covered with a thin layer of protective coating without waste of the antimicrobial agent as dripping is prevented or greatly reduced by the rheology modifier. By formulating compositions with appropriate rheology modifier and degree of cross-linking, coating compositions with various coating properties may be prepared that will vary in the degree of surface finish and protection as well as ease of removal.

The coating composition of the present invention offers several mechanisms of protection towards contamination of microbial or non-microbial origin, such as soiling. For example, as the liquid composition is applied, planktonic or loosely adhering cells on the surface are killed, or growth is reduced or prevented by the antimicrobial agent in the coating formulation.

Further, after application of the antimicrobial composition of the present invention, cells harbored by biofilms on the surface will be killed, or growth may be reduced or prevented, by diffusion of the antimicrobial(s) into the hydrated biofilm before the applied film-forming composition completely dries to provide an antimicrobial film. For sustained antimicrobial activity it is desirable that the antimicrobial films of the present invention be semi-permeable. The antimicrobial film thus formed constitutes a reservoir of antimicrobial agent providing much longer contact time than conventional sanitary rinse solutions that typically drip off within seconds or minutes.

The long lasting activity while the coating is present on the locus is especially beneficial in a variety of applications. The film-forming antimicrobial composition of the present method does not drip off of the target surface quickly, and is not easily removed by incidental contact, for example. The variation of film flexibility, viscosity, strength, and adhesion of the coating of the present invention permits it to be tailored to specific applications, thus making sustained antimicrobial protection available in numerous situations where such sustained activity (residual benefit) was not previously available.

Use of the antimicrobial, removable coating composition provides several advantages. The coating composition provides antimicrobial efficacy in a number of ways, including, but not limited to killing both loose microorganisms and biofilms, reducing the growth of, or preventing the growth of microorganisms, by preventing the formation of biofilms, and by trapping microorganisms in, beneath or attached to the coating. Application of the coating composition also reduces water usage because a concentrate of antimicrobial agent is directly applied in a thin film, and the antimicrobial agent may be maintained in higher concentrations and for longer periods of time at the substrate. In addition, labor may be reduced because the antimicrobial coating is applied once and removed in a later process step. The coating composition may be modified by formulating the composition with flow modifiers to coat hard-to-reach surfaces. This enables application of the antimicrobial agent to surfaces on or in equipment otherwise not accessible by application of conventional antimicrobial solutions with traditional shear-viscosity profiles. Horizontal and vertical surfaces may be covered with a thin layer of protective coating without waste of antimicrobial agent. By formulating compositions with appropriate flow modification and degree of cross-linking, coating compositions with various coating properties can be prepared that will vary in the degree of surface finish and protection as well as ease of removal.

In one embodiment of the present method, the antimicrobial, removable coating composition useful in the practice of the present invention is applied to equipment, for example, in the food, dairy, or beverage industries, during shutdown periods of the equipment. When the equipment is started up, the coating is removed by methods described herein. In another embodiment, the antimicrobial, removable coating composition is used for sanitation of surfaces, such as surfaces of equipment of the food or beverage industry, for daily or weekly sanitation purposes. In yet another embodiment, fruit surfaces may be coated with the removable coating composition to prevent microbial spread and cross-contamination in food processing facilities. In still another embodiment, hospital walls, beds, and other hospital surfaces may be coated with the antimicrobial, removable coating composition useful for the present method. In another embodiment drains are coated with the removable coating composition. In another embodiment, building surfaces, such as in new home construction, walls or other surfaces are coated for prevention of mold contamination or mold removal.

The antimicrobial film of the present invention constitutes a reservoir of antimicrobial agent providing longer contact time than sanitary rinse solutions that drip off within seconds or minutes. This mechanism will prevent biofilms from growing on the antimicrobial coating until the antimicrobial agent has been exhausted from the coating.

Typical biofilm microorganisms are Gram positive and/or Gram negative bacteria, acting as pathogens, indicator microorganisms, and/or spoilage microorganisms.

The coating constitutes a physical barrier for microorganisms, soil, fat and other matter. These solid contaminants will remain on the surface of the coating and will wash off at the time of removal of the coating. An antimicrobial coating of the present invention can trap microorganisms so that they cannot reach or permeate a target surface and contaminate it.

The variation of film flexibility, viscosity, strength, and adhesion of the coating of the present method permits it to be tailored to specific applications, thus making sustained antimicrobial protection available in numerous situations and/or environments where such sustained activity (residual benefit) was not previously available.

### COMPONENTS OF THE COMPOSITION

The following provides a detailed description of the components of the compositions described herein.

Film-forming water soluble or water dispersible agents suitable for use in the practice of the present invention are described in the commonly owned and co-pending U. S. patent applications Nos. 2008/0026026 and 2007/0275101. Suitable film-forming agents are selected from, but are not limited to, polyvinyl alcohols, polyvinyl alcohol copolymers, polyvinyl pyrrolidones, polyacrylic acid, acrylate copolymers, ionic hydrocarbon polymers, polyurethanes, polysaccharides, functionalized polysaccharides, arabinoxylanes, glucomannanes, guar gum, gum arabic, johannistree gums, cellulose, methyl cellulose, ethyl cellulose, hydroxymethyl cellulose, hydroxyethyl cellulose, carboxymethyl cellulose, carboxyethyl cellulose starch, hydroxyethyl starch, xanthan gum, carrageenan, curdlan, pullulan, gelatin, dextran, chitosan, glycerol, sodium alginate, sodium alginate cross-linked with calcium salt, carrageenan, ethyleneoxide/propylene oxide/ethyleneoxide block copolymers, and combinations there of. One skilled in the art may easily select the range of suitable molecular weights in order to provide a range of water solubility to provide a readily removable coating according to the methods of this invention.

Rheology modifiers in general are used to adjust or modify the rheological properties of aqueous compositions. Such properties include, without limitation, viscosity, flow rate, stability to viscosity change over time, and the ability to suspend particles in such aqueous compositions.

"Cationic rheology modifier" or "cationic rheology agent", as used herein, refers to rheology agents comprising
a) a functional group of a structure 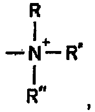 and in particular
b) an acrylic polymer comprising functional groups of a structure chosen from 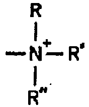 or 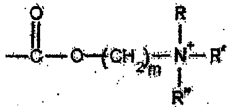
wherein each of R, R' and R" is independently either an alkyl or aryl group, or a combination thereof, and wherein m is 1 to 5.

The corresponding anions to the cationic functional groups may be any anion.

Example of cationic rheology modifiers are the cationic acrylic copolymers, such as Rheovis® CDE, Rheovis® FRC and Rheovis® CSP available from Ciba® (Basel, Switzerland).

The rheology agent or rheology modifier used in this disclosure provides pseudoplastic or shear-thinning properties for the coating composition. Pseudoplastic compositions are known to cling to inclined or vertical surfaces. Clinging also enables the composition to remain in contact with transient and resident microorganisms for longer periods of time, promoting microbiological efficacy and resisting waste due to excessive dripping. Clinging also enables an improved appearance of the coating as sagging and/or dripping is prevented.

### Antimicrobial agent

Suitable antimicrobial agents useful in the practice of the present invention are described in the commonly owned and co-pending U. S. patent applications Nos. 2008/0026026 and 2007/0275101. The coating composition comprising the antimicrobial agent offers protection against diverse microorganisms.

The antimicrobial agent useful for the invention can be either an inorganic or organic agent, or a mixture thereof. The invention is not to be limited to the selection of any particular antimicrobial agent, and any known water-soluble or water-dispersible antimicrobial may be included in the compositions of the invention such as antimicrobials, mildewcides, antiseptics, disinfectants, sanitizers, germicides, algicides, antifouling agents, preservatives, and combinations of the foregoing and the like provided that the antimicrobial agent is chemically compatible with other components in the composition. Suitable classes of antimicrobial agents are described below.

The term "inorganic antimicrobial agent" used herein is a general term for inorganic compounds which contain a metal or metal ions, such as silver, zinc, copper and the like which have antimicrobial properties. The term "organic antimicrobial agent" used herein is the general term for natural extracts, low molecular weight organic compounds and high molecular weight compounds all of which have antimicrobial properties and which generally contain nitrogen, sulfur, phosphorus or like elements. Examples of useful natural antimicrobial agents are chitin, chitosan, antimicrobial peptides such as nisin, lysozymes, wasabi extracts, mustard extracts, hinokitiol, tea extracts and the like. High molecular weight compounds having anti-microbial properties include those having an ammonium salt group, phosphonium salt group, sulfonium salt group or like onium salts, a phenylamide group, or a diguanide group attached to a straight or branched polymer chain, for example phosphonium salt-containing vinyl polymers, as are known in the art (E. -R. Kenawy and Y. A. -G. Mahmoud "Biologically active polymers, 6: Synthesis and antimicrobial activity of some linear copolymers with quaternary ammonium and phosphonium groups" in Macromolecular Bioscience (2003), 3(2), 107-116).

Examples of useful low molecular weight antimicrobial agents include chlorhexidine, chlorhexidine gluconate, glutaral, halazone, hexachlorophene, nitrofurazone, nitromersol, thimerosol, C1-C5 - parabens, hypochlorite salts, clofucarban, clorophen, phenolics, mafenide acetate, aminacrine hydrochloride, quaternary ammonium salts, chlorine and bromine release compounds (e.g., alkali and alkaline earth hypochlorites and hypobromites, isocyanurates, chlorinated derivatives of hydantoin, sulfamide, amine, etc.), peroxide and peroxyacid compounds (e.g., peracetic acid, peroctanoic acid), protonated short chain carboxylic acids, oxychlorosene, metabromsalan, merbromin, dibromsalan, glyceryl laurate, sodium and/or zinc pyrithione, trisodium phosphates, (dodecyl)(diethylenediamine)glycine and/or (dodecyl)(aminopropyl)glycine and the like. Useful quaternary ammonium salts include the N-C10-C24 - alkyl-N-benzyl-quaternary ammonium salts which comprise water solubilizing anions such as halide, e.g., chloride, bromide and iodide; sulfate, methosulfate and the like and the heterocyclic imides such as the imidazolinium salts. Useful phenolic germicides include phenol, m-cresol, o-cresol, p-cresol, o-phenyl-phenol, 4-chloro-m-cresol, chloroxylenol, 6-n-amyl-m-cresol, resorcinol, resorcinol monoacetate, p-tert-butylphenol and o-benzyl-p-chlorophenol. Useful antimicrobial agents known to be effective in preventing the visible growth of mildew colonies, include, for example, 3-iodo-2-propynl butylcarbamate, 2-(4-thiazolyl)benzimidazole, diiodomethyl-p-tolylsulfone, tetrachloroisophthalonitrile, the zinc complex of 2-pyridinethiol-1-oxide (including salts thereof) as well as combinations of the foregoing.

In one embodiment, the coating composition protects against Gram positive or Gram negative bacteria. Gram positive bacteria which are inhibited or killed by the coating include, but are not limited to, *Mycobacterium tuberculosis, M. bovis, M. typhimurium, M. bovis strain BCG, BCG substrains, M. avium, M. intracellulare, M. africanum, M. kansasii, M. marinum, M. ulcerans, M. avium subspecies paratuberculosis, Staphylococcus aureus, S. epidermidis, S. equi, Streptococcus pyogenes, S. agalactiae, Listeria monocytogenes, L. ivanovii, Bacillus anthracis, B. subtilis, Nocardia asteroides, and other Nocardia species, Streptococcus viridans group, Peptococcus species, Peptostreptococcus species, Actinomyces israelii* and other *Actinomyces* species, *Propionibacterium acnes,* and *Enterococcus* species. Gram negative bacteria which are inhibited or killed by the coating include, but are not limited to, *Clostridium tetani, C. perfringens, C. botulinum,* other *Clostridium* species, *Pseudomonas aeruginosa,* other *Pseudomonas* species, *Campylobacter* species, *Vibrio cholerae, Ehrlichia species, Actinobacillus pleuropneumoniae, Pasteurella haemolytica, P. multocida,* other *Pasteurella* species, *Legionella pneumophila,* other *Legionella* species, *Salmonella typhi,* other *Salmonella* species, *Shigella* species *Brucella abortus,* other *Brucella* species, *Chlamydia trachomatis, C. psittaci, Coxiella burnetti, Escherichia coli, Neiserria meningitidis, N. gonorrhea, Haemophilus influenzae, H. ducreyi,* other *Haemophilus* species, *Yersinia pestis, Y. enterolitica,* other *Yersinia* species, *Escherichia coli, E. hirae* and other *Escherichia* species, as well as other Enterobacteriacae, *Brucella abortus* and other *Brucella* species, *Burkholderia cepacia, B. pseudomallei, Francisella tularensis, Bacteroides fragilis, Fusobacterium nucleatum, Provetella* species, *Cowdria ruminantium, Klebsiella* species, and *Proteus* species. In another embodiment, the coating provides protection against fungi, including but are not limited to, *Alternaria alternata, Aspergillus niger, Aureobasidium pullulans, Cladosporium cladosporioides, Drechslera australiensis, Gliomastix cerealis, Monilia grisea, Penicillium commune, Phoma fimeti, Pithomyces chartarum,* and *Scolecobasidium humicola.*

The compositions useful in the practice of the present invention can include a first surfactant. Suitable first surfactants have a preferred hydrophilic-lipophilic balance (HLB) of from about 9 to about 17. Suitable first surfactants include, but are not limited to: amphoteric surfactants, such as Amphoteric N from Tomah Products; silicone surfactants, such as BYK 348 available from BYK Chemie (Wesel, Germany); fluorinated surfactants such as Zonyl® FS300 from DuPont (Wilmington, DE, USA); and nonylphenoxy-polyethoxy-ethanol based surfactants, such as Triton N-101 available from Dow (Midland, Ml, USA). Other suitable first surfactants include ethoxylated decynediols such as Surfynol 465 available from Air Products & Chemicals (Allentown, PA, USA); alkylaryl polyethers such as Triton CF-1 0 available from Dow; octylphenoxy polyethoxy ethanols such as Triton X-100 available from Dow; ethoxylated alcohols such as Neodol 23-5 or Neodol 91-8 available from Shell (The Hague, the Netherlands); Tergitol 15-S-7 available from Dow, Steol-4N, a 28% sodium laureth sulfate from Stepan Company (Northfield, IL, USA), sorbitan derivatives such as Tween 20 or Tween 60 from Uniqema (New Castle, DE, USA), and quaternary ammonium compounds, such as benzalkonium chloride. Other suitable first surfactants include organosilicone surfactants such as Silwet®L-77 from Setre Chemical Company (Memphis, TN, USA), DowCorning® Q2-5211 from DowCorning Silicones (Midland, Ml, USA), or Silsurf® A008 by Siltech Corporation (Toronto, ON, Canada). The first surfactant can be included in an amount of from about 0.001 to about 5 wt% of the formulation, or from about 0.01 to about 1 wt%.

The compositions useful in the practice of the present invention can include a second surfactant. The second surfactant can increase the antimicrobial activity of the coating composition by providing a synergistic effect in combination with the first antimicrobial agent in the coating composition of the present invention. Suitable second surfactants can be selected from, for example: alkylbenzenesulfonic acid such as Biosoft® S101; amineoxide surfactants such as lauryl-dimethylamine oxide; alcohol ethoxylates such as ethoxylates of the general formula R-O(CH₂CH₂O)ₘH with "m" ranging from about 2 to 20 and "R" indicating a linear or branched alkyl group.

The second surfactant can be included in an amount of from about 0.001 to about 0.2 wt% of the formulation, or from about 0.005 to about 0.05 wt%.

Inert solvents useful in the practice of the present invention include water. Additional solvents include mono alcohols monofunctional and polyfunctional alcohols, preferably containing from about 1 to about 6 carbon atoms and from 1 to about 6 hydroxy groups. Examples include ethanol, isopropanol, n-propanol, 1,2-propanediol, 1,2-butanediol, 2-methyl-2,4-pentanediol, mannitol and glucose. Also useful are the higher glycols, polyglycols, polyoxides, glycol ethers and propylene glycol ethers. Additional solvents include the free acids and alkali metal salts of sulfonated alkylaryls such as toluene, xylene, cumene and phenol or phenol ether or diphenyl ether sulfonates; alkyl and dialkyl naphthalene sulfonates and alkoxylated derivatives.

Additional components that may be added to the coating composition include colorants, rheology modifiers, cross-linking agents, plasticizers, surfactants, solubilizing agents, antioxidants, pH adjusters, wetting agents, antifoaming agents, extenders, lubricants, processing aids, color fastness agents, and additional performance-enhancing agents.

Wetting agents lower the surface tension of the formulation to allow it to wet the surfaces, spread on the surfaces and potentially penetrate into, under, and around soils, solid matter, microorganisms, biofilms, surface contaminations, fat and surface crevices.

Colorants useful in the practice of the present invention include dyes and pigments such as food grade pigments. Dyes useful in the practice of the present invention are described in the commonly owned and co-pending U. S. Patent Applications Nos. 2008/0026026 and 2007/0275101.

The present disclosure may optionally include cross-linking agents. Suitable crosslinking agents are described in the commonly owned and co-pending U. S. Patent Applications Nos. 2008/0026026 and 2007/0275101.

It is important for flexibility and integrity of the protective film that the resultant film be plasticized. Plastization of the film has been accomplished for the purposes of this disclosure by incorporation of a suitable plasticizing agent such as polyethylene glycol or glycerol. Other plasticizers suitable plasticizers are summarized in the commonly owned and co-pending U. S. Patent Applications Nos. 2008/0026026 and 2007/0275101.

In addition to the foregoing components, the composition of the present disclosure may also comprise one or more performance enhancing additives also known as "performance enhancers". These include flash rust inhibitors, which include any of a number of organic or inorganic materials used in a water-based system to prevent rust from forming on contact with the material and bare metal. One example is sodium benzoate.

Another optional performance enhancing additive is one or more of an array of defoamers recommended for water-based systems, to prevent unwanted foaming (gas bubbles) of the product during application or after formation of the film or coating. Too much foam may disrupt the required continuous film formation of the product and result in product failure. It can be advantageous to add a foam control product, such as Drewplus L475 obtained commercially from Ashland Chemical, Inc., Drew Industrial Division (Covington, KY, USA).

The liquid coating composition of the current disclosure may be applied in the form of a foam to a locus whereby the composition serves as a temporary visual indicator that the surface has been covered. By the action of an antifoaming agent, the foam or gas bubbles are broken down, which is indicative of a dried film or coating. Thus, the antifoaming agent can be used in accordance with the current disclosure as an indicator by an operator, letting the operator know that the film or coating has dried.

Additional optional performance enhancing additives are antioxidants to increase the shelf life of the coating formulation. One example is butylated hydroxytoluene. Additional additives include fragrances.

Application indicators may also be added. Some of these are described above, but include pigments, dyes, fluorescent dyes or gas bubbles generated during application.

Small amounts (typically less than 1 percent by weight) of these additional materials may be added with an appropriate adjustment of the water or other components. It is to be understood that mixtures of any one or more of the foregoing optional components may also be employed.

For loci comprised of fibrous substrates, an optional performance-enhancing ingredient is an agent that provides a surface effect. Such surface effects include no iron, easy to iron, shrinkage control, wrinkle free, permanent press, moisture control, softness, strength, anti-slip, antistatic, anti-snag, anti-pill, stain repellency, stain release, soil repellency, soil release, water repellency, oil repellency, odor control, antimicrobial, or sun protection.

The film or coating may be applied to the target surface or locus by any means, including pouring. The film or coating is applied to achieve a continuous and/or homogenous layer on a target surface. Coating systems routinely used for paints and coatings, such as, but not limited to, brushes, rollers, paint pads, mats, sponges, combs, hand-operated pump dispensers, compressed air operated spray guns, airless spray guns, electric or electrostatic atomizers, backpack spray application equipment, aerosol spray cans, clothes, papers, feathers, styluses, knives, and other applicator tools can be used for coating. If dipping is used as a method to apply the coating, no special equipment is required. If an aerosol spray can is used for application, the coating composition may be mixed with an aerosol propellant (such as a compressed gas) or the coating composition may be physically separated from the propellant by a barrier material such as a polymer bag inside the can; if the coating composition and the propellant are mixed the mixture may constitute one or more liquid phases.

For fibrous substrates, such as textiles and carpets, the coating may be applied by exhaustion, foam, flex-nip, nip, pad, kiss-roll, beck, skein, winch, liquid injection, overflow flood, roll, brush, roller, spray, dipping, immersion, and the like. The coating may also be applied by use of the conventional beck dyeing procedure, continuous dyeing procedure or thread-line application.

In one embodiment of the current disclosure, electrostatic sprayers may be used to coat the surface. Electrostatic sprayers impart energy to the aqueous coating composition via a high electrical potential. This energy serves to atomize and charge the aqueous coating composition, creating a spray of fine, charged particles. Electrostatic sprayers are readily available from suppliers such as Tae In Tech Co. , South Korea and Spectrum, Houston, TX, USA. Generally, the coating is allowed to set or dry for about greater than 5 minute. However, the coating may be antimicrobially effective in a shorter time-frame, such as after 30 seconds. The coating may be removed before it is dried or anytime thereafter depending on the desired use. The drying time will be partially dependent on a number of factors, including environmental conditions such as humidity and temperature. The drying time will also depend on the thickness of the applied coating.

In another embodiment of the current disclosure, an airless spray system may be used to coat the target surface. Airless spray systems use high fluid pressures and special nozzles, rather than compressed air, to convey and atomize the liquid. The liquid is supplied to an airless gun by a fluid pump at pressures typically ranging from 3.5 to 45 MPa. When the paint exits the fluid nozzle at this pressure, it expands slightly and atomizes into tiny droplets without the impingement of atomizing air. The high velocity of the exiting paint propels the droplets toward the target surface. The fluid nozzle on an airless gun differs substantially from the fluid nozzle on an air atomized gun. Selection of the proper nozzle determines how much paint is delivered and the fan pattern of application. The size of the airless nozzle orifice determines the quantity of paint to be sprayed. Airless fluid delivery is high, typically ranging from 700 to 2000 mL/min. Recommended gun distance is about 30 to 45 cm from the target, and depending upon the nozzle type, a fan pattern of 10 to 60 cm is possible. Thus, nozzles may be selected for each application based on the size and shape of the target surface and the thickness of the coating to be applied. Airless guns create little air turbulence that may repel the liquid from "hard to reach areas", such as would be found in food processing equipment, hatcheries etc. The high flow rate makes airless advantageous in cleaning and disinfecting situations, where the antimicrobial coating is to be applied over a large surface area and multiple surfaces. The thickness of the applied and dried film will depend on a variety of factors. These factors include the concentration of the film forming agent, the concentration of rheology control additives and/or other additives, as well as the application temperature and humidity. Film thickness and film uniformity also depend, at least in part, on parameters of the application equipment, such as fluid delivery, spray orifice diameter, air pressure or piston pump pressure in the case of airless application, and the distance of the spray applicator to the target surface. Therefore, the liquid formulation may be adjusted to yield the desired film thickness.

The application of the liquid coating composition may be performed in a single pass or in multiple passes over the same surface to be covered. Single pass application usually comprises the parallel application of bands with the bands having a certain overlap with each other, e.g., an overlap of 10-20% with respect to the band width to achieve a homogenous coating with complete coverage. When multiple passes are used, the coating composition is intentionally applied more than once over the same surface area to be covered, wherein the passes may be in parallel or at a certain angle, often perpendicular to each other, and wherein there may be certain time between the passes; leaving some time between the passes in a multiple pass application may have the benefit of improving the homogeneity of the coating as the tendency to sag is typically reduced when compared to applying the same film thickness in a single pass.

In another embodiment of the current disclosure, a backpack spray system (also known as backpack sprayer, knapsack sprayer or pesticide sprayer) may be used to coat the target surface. A backpack spray system is a device worn on the back. It comprises a container plus a spray nozzle mounted on a wand and is typically used for spraying, misting, plant feeding, as a portable watering device or pesticide application. The container of a backpack spray system commonly has a capacity up to about 20 liters of liquid to be sprayed. The material can be pressurized with a hand pump. Hand pumps can develop pressures up to about 1.2 MPa. The pressurized liquid flows from the container through the line and the wand to the spray nozzle (also known as spray tip). The spray nozzle is commonly at the end of the wand and provides the desired flow rate and spray pattern. Spay patterns depend on the type of spay nozzle and include flat fan pattern, cone pattern, hollow cone pattern, star patterns, flood pattern, etc. Flow rates may range from about 0.05 to 50 L/min, depending on the equipment type, pressure, nozzle type, liquid rheology and temperature.

The atomization of the coating solution is chosen such that a thin film is applied homogeneously to the target area.

Target surfaces (loci) include all surfaces that may potentially be contaminated with microorganisms, including surfaces typically difficult to apply a disinfectant or sanitizer to (such as hard-to-reach surfaces). Examples of target surfaces include equipment surfaces found in the food or beverage industry (such as tanks, conveyors, floors, drains, coolers, freezers, refrigerators, equipment surfaces, ceilings, walls, valves, belts, pipes, drains, ductwork, joints, crevasses, combinations thereof, and the like); building surfaces, including buildings under construction, new home construction, and surfaces in or on seasonal properties like vacation home surfaces (such as ceilings, walls, wood frames, floors, windows, ductwork), kitchens (sinks, drains, counter-tops, refrigerators, cutting boards), bathrooms (showers, toilets, drains, pipes, ductwork, bath-tubs), (especially for mold removal), decks, wood, siding and other home exteriors, asphalt shingle roofing, patio or stone areas (especially for algae treatment); boats and boating equipment surfaces; garbage disposals, garbage cans and dumpsters or other trash removal equipment and surfaces; non-food-industry related pipes and drains; surfaces found in hospitals; or surfaces where surgery, out-patient , or veterinary services are provided (such as ceilings, walls, floors, ductwork, beds, equipment, clothing worn in hospital/veterinary or other healthcare settings, including scrubs, shoes, and other hospital or veterinary surfaces) first-responder or other emergency services equipment and clothing; lumber-mill equipment, surfaces and wood products; restaurant surfaces; supermarket, grocery, retail and convenience store equipment and surfaces; deli equipment and surfaces and food preparation surfaces; brewery and bakery surfaces; bathroom surfaces such as sinks, showers, counters, and toilets; clothes and shoes; toys; school and gymnasium equipment, ceilings, walls, floors, windows, ductwork and other surfaces; kitchen surfaces such as sinks, counters, appliances; wooden or composite decks, pool, hot tub and spa surfaces; carpet; paper; leather; animal carcasses, fur and hides; surfaces of barns, or stables for livestock, such as poultry, cattle, dairy cows, goats, horses and pigs; and hatcheries for poultry or for shrimp. Surfaces within structures wherein animals are housed, such as cages and pens for example, can be coated using the antimicrobial coatings described herein. Additional surfaces also include food products, such as beef, poultry, pork, vegetables, fruits, seafood, combinations thereof, and the like.

Additional loci suitable for use in the present invention comprise fibrous surface substrates and include fibers, yarns, fabrics, textiles, nonwovens, carpets, leather, or paper. The fibrous substrates are made with natural fibers such as wool, cotton, jute, sisal, sea grass, paper, coir and cellulose, or mixtures thereof; or are made with synthetic fibers such as polyamides, polyesters, polyolefins, polyaramids, acrylics and blends thereof; or blends of at least one natural fiber and at least one synthetic fiber. By "fabrics" is meant natural or synthetic fabrics, or blends thereof, composed of fibers such as cotton, rayon, silk, wool, polyester, polypropylene, polyolefins, nylon, and aramids such as "NOMEX®" and "KEVLAR®." By "fabric blends" is meant fabric made of two or more types of fibers. Typically these blends are a combination of at least one natural fiber and at least one synthetic fiber, but also may be a blend of two or more natural fibers or of two or more synthetic fibers. Nonwoven substrates include, for example, spunlaced nonwovens, such as SONTARA available from E. I. du Pont de Nemours and Company (Wilmington, DE, USA), and laminated nonwovens, such as spunbonded-meltblown-spunbonded nonwovens.

Examples of surface materials are metals (e.g., steel, stainless steel, chrome, titanium, iron, copper, brass, aluminum, and alloys thereof), minerals (e.g., concrete), natural or synthetic polymers and plastics (e.g., polyolefins, such as polyethylene, polypropylene, polystyrene, poly(meth)acrylate, polyacrylonitrile, polybutadiene, poly(acrylonitrile, butadiene, styrene), poly(acrylonitrile, butadiene), acrylonitrile butadiene; polyesters such as polyethylene terephthalate; and polyamides such as nylon). Additional surfaces include brick, tile, ceramic, porcelain, glass, wood, vinyl, and linoleum.

Equipment or surfaces protected with a temporary coating may be in use or not in use while protected. The target surface may be hydrophobic or hydrophilic.

Generally, the coating is allowed to set or dry for about 5 to about 240 minutes in order to form the film. The drying time will be partially dependent on a number of factors, including environmental conditions such as humidity and temperature. The drying time will also depend on the thickness of the applied coating. The present composition, when applied onto a surface, will form a film or a coating by evaporation of the inert solvent. The solvent evaporation could occur by allowing the coating to dry in place, or alternatively by blowing dry with heated or unheated air. However, the coating may be effective as an antimicrobial agent in a shorter time-frame, such as after 30 seconds. The coating may be removed before it is dried or anytime thereafter depending on the desired use.

The thickness of the film or coating applied onto the target surface influences the time needed for removal and the amount of biocide per unit area applied to the surface. Thicker films increase the time interval until the film has to be re-applied to maintain the desired antimicrobial properties. Thinner films will be easier and faster to remove by rinsing. It is thus important to apply the formulation in a fashion that results in a film thickness that allows both easy removal of the coating and long-lasting antimicrobial properties. The film or coating has a thickness of about 0.3 to about 300 micrometers. In a more specific embodiment, the film or coating has a thickness of about 0.5 to about 100 micrometers. In an even more specific embodiment, the film or coating has a thickness of about 1.0 to about 30 micrometers.

The method of this disclosure is directed to films or coatings that may be removed at a time determined appropriate by the user. The time of removal may be determined by either (i) the desired minimum contact time to allow for the desired antimicrobial activity, typically expressed as amount of killed or inactivated microorganisms out of a starting population or (ii) the need or desire to take the coating off the surface before starting a subsequent operation or process step. Although the coating may be removed any time, such as after drying, the film thickness, concentration of antimicrobial agent, and specific use determines the appropriate time for removal. For instance the user may wish to put treated equipment back into normal operation after a period of operational shutdown. Fruits, for example, will require washing prior to eating. Upon exhaustion of the biocide in the film, the film could be removed and a fresh coating layer could be applied. For example, drains may be treated periodically such as daily, weekly or biweekly. Antimicrobial activity may be measured as early as after 30 seconds, hours, days, weeks, months, even years after application of the film. Therefore, timing of removing the coating is a function of the application for which the coating is employed.

Film removal may be achieved by dissolution or dispersion of the resulting coating. This may be achieved by the application of an aqueous solution onto the coating. In one embodiment, the temperature of the solution is in the range of about 5°C to about 100°C. In another embodiment, the temperature of the solution is from about 10 to about 80°C. The application of the solution, or water, may be achieved by a simple rinse or spray onto the surface. Coating removal may also be achieved by use of a pressure washer, facilitating removal by additional mechanical forces. Coating removal may also be achieved by washing with water together with a cloth or sponge. Further, mild additives may be utilized or mixed with the aqueous solution to help solubilize or disperse the film-forming or water-dispersible agents, including commonly used acids or bases, chelators or detergents. Alternatively, the film may be degraded, such as in a drain, by repeated washing of water and/or other components down the drain. The film may also be removed by peeling it off a surface, being abraded or brushed from the surface, or other mechanical mechanisms of removal.

Besides the intentional removal by an operator, removal also includes the removal by an automated or robotic system and the non-intentional removal by a liquid continuously or periodically contacting the coating over time, e. g. in a pipe or drain, or by continuous or periodical application of mechanical forces, such as wear.

Removal of an antimicrobial coating of the present invention can be effected using an aqueous solution. For the purposes of the present invention, an aqueous solution used for coating removal is any solution containing 60 to 100 wt% water, the remaining components being dissolved components. Dissolved components may include, but are not limited to, solvents such as alcohols, solubilizing agents, surfactants, salts, chelators, acids and bases.

All of the methods and compositions disclosed and claimed herein may be made and executed without undue experimentation in light of the present disclosure. While the methods and compositions of the present disclosure have been described in terms of various aspects of the current disclosure and preferred embodiments, it will be apparent to those of skill in the art that variations may be applied to the compositions and methods and in the steps or in the sequence of steps of the disclosure described herein. More specifically, it will be apparent that certain agents, which are chemically related, may be substituted for the agents described herein while the same or similar results would be achieved. All such similar substitutes and modifications apparent to those skilled in the art are deemed to be within scope of the current disclosure as defined by the appended claims,

### EXAMPLES

The present disclosure is further defined in the following Examples. It should be understood that these Examples, while indicating certain preferred embodiments of the disclosure, are given by way of illustration only. From the above discussion and these Examples, one skilled in the art can ascertain the essential characteristics of this disclosure, and without departing from the scope thereof, can make various changes and modifications of the disclosure to adapt it to various uses and conditions.

### Abbreviations and other terms used in the Examples

"ATCC" means American Type Culture Collection; "°C" means degrees Celsius; "CFU" means colony forming unit; "rpm" means revolution per minute; "mol/L" means mole per liter; "PFU/mL" means plaque forming units per milliliter; "kg" means kilogram; "DI" means deionized; "FBS" means fetal bovine serum; "cm" means centimeter; "m" means meter; "m" means micrometer; "m²/min" means square meter per minute; *"g*/*m²"* means grams per square meter; "g" means earth gravitational constant; "L" means liter; "log CFU" is the base-10 logarithm of the CFU number; "log CFU" is the difference of log CFU for an untreated sample and log CFU for a samples treated with a coating composition; "mL" means milliliter; "MPa" means megapascal; "mS/cm" means millisiemens per centimeter; "NFC" means non-food contact sanitizer test; "Pa" means pascal; "Pa-s" means pascalseconds; "PEG" means polyethylene glycol; "rpm" means revolutions per minute; "RSS" means residual self-sanitizing activity; "s⁻¹ " means seconds to the minus first power; "SS316" means stainless steel, type 316 (ASTM standard); "wt%" means weight percent.

### Chemicals

All chemicals were obtained from Sigma-Aldrich (St. Louis, MO, USA) unless stated otherwise. Alcogum® L-520 was obtained from Alco Chemical® (Chattanooga, TN, USA). Rheovis® FRC was from Ciba® (Basel, Switzerland). Elvanol® 51-04 and 1,1,1,2-Tetrafluoroethane were from DuPont (Wilmington, DE, USA). Polyethylene glycol (PEG-300) was from Dow (Midland, Ml, USA). FD&C Blue No. 1 dye was from Pylam Products (Tempe, AZ, USA). BTC® 885 and Biosoft® N25-7 were from Stepan (Northfield, IL, USA). Surfynol® MD-20 and EnviroGem® 360 were from AirProducts (Allentown, PA, USA). Bacto™ D/E neutralizing broth was from Difco (Cat. No. 281910, Difco™ Laboratories, Detroit, MI, USA). Liquitint® Patent Blue was from Milliken (Spartanburg, SC, USA).

### GENERAL METHODS

### Test methods for antimicrobial efficacy on hard surfaces

Biocidal or antimicrobial efficacy of the coating compositions according to this disclosure was measured using the test methods described below:
*Non-food contact sanitizer (NFC) test*: To assess the antimicrobial activity of coating compositions according to this disclosure for situations where microbial contamination is already present on the target surface at the time of the application of the antimicrobial coating composition the "Standard Test Method for Efficacy of Sanitizers Recommended for Inanimate Non-Food Contact Surfaces" according to ASTM standard E1153-03 was used. The test method is referred to as non-food contact sanitizer test or NFC test. Results are reported as log CFU which indicates the difference of log CFU for inoculated, untreated control coupons and log CFU for coupons treated with the coating compositions according to the method provided herein. The log CFU numbers for both control and treated coupons were calculated as the geometric mean of the number of microorganisms surviving on replicate coupons. All log numbers are base-1 0 logarithms.
*Residual self-sanitizing (RSS) test with bacteria:* To assess the antimicrobial activity of coating compositions according to this method for situations where microbial contamination comes into contact with the already dry coating, the following residual self-sanitizing test method was used. The test method is referred to as residual self-sanitizing test or RSS test. 25.4 mm x 25.4 mm, non-porous, pre-cleaned, stainless steel (type SS316) coupons were used for the test. The test microorganism was transferred from a frozen stock culture to a tube of the culture medium. The tube was incubated for a duration and temperature that provides good growth. The inoculum was maintained by consecutively transferring to the fresh culture medium. The approximately 48 hour old inoculation suspensions were mixed for approximately 3 seconds and let stand for 15 minutes. The inoculum suspension typically contained approximately 1 x 10⁸ CFU/mL. The upper two-thirds of the total inoculum volume was decanted or pipetted off and transferred into a fresh sterile tube. A volume of sterile FBS was added to yield a 5 wt% organic soil load. The inoculum was left at room temperature for about 15 minutes.

The test coupons were cleaned using a mild detergent, then alcohol, and rinsed thoroughly in sterile water and allowed to air dry. All handling of surfaces, once cleaned, was done using sterile forceps. Coupons were immersed in 70 wt% ethanol for 30 minutes and allowed to dry completely. 0.05 to 0.1 mL of the coating composition to be tested was applied to each stainless steel coupon and spread evenly. The coating compositions were allowed to dry at room temperature overnight. Control surfaces were untreated coupons handled under the same conditions as the coupons treated with the coating compositions or coupons that were treated with a coating composition that contained no antimicrobial agent.

Coupons were inoculated by spotting 0.01 mL of the inoculum over the surface of the coupon. Two coupons were inoculated per coating composition. After 5 minutes contact time (or other appropriate time), the inoculation sterile forceps were used to transfer the coupons to 20 mL of neutralizer broth in a 50 mL test tube. The samples were sonicated for 20 seconds in a sonicating water bath, and then agitated on an orbital shaker for 3-4 minutes at 250 rpm. All samples were serially diluted in duplicate in phosphate buffered dilution water and all samples were streaked on plates within approximately 30 minutes of their transfer to the Bacto™ D/E neutralizing broth.

Results are reported as log CFU which indicates the difference of log CFU for inoculated, untreated control coupons and log CFU for coupons treated with the coating compositions according to this disclosure. The log CFU numbers for both control and treated coupons were calculated as the geometric mean of the number of microorganisms surviving on replicate coupons. All log numbers are base-10 logarithms. *Residual self-sanitizing (RSS) test with fungal spores*: To assess the antimicrobial activity of coating compositions according to this disclosure for situations where a fungal contamination comes into contact with the already dry coating the following residual self-sanitizing test method was used. The test method is referred to as residual self-sanitizing test or RSS test. 25.4 mm x 25.4 mm, non-porous, pre-cleaned, stainless steel (type SS316) coupons were used for the test. The test microorganism used in this study was *Trichophyton mentagrophytes* ATCC 9533. Potato Dextrose Agar (PDA) plates were used. Twenty plates were streaked with one of the cultures and incubated for 2 weeks at room temperature. Plates were then washed twice with sterile Dl water containing 0.01 wt% Tween® 80, and scraped with a sterile spreader. The washes were combined into a sterile flask with glass beads, and shaken on a wrist action shaker for 1 hour. The flask contents were then filtered through sterile gauze into a new sterile flask and stored at 4°C. The concentration of viable fungal spores was determined by standard plate count methodology using serial dilutions in sterile phosphate buffer and spreading onto PDA plates. The PDA plates were incubated for 4 days before the colonies were counted. Before the start of the test, 24 mL of the spore preparation was centrifuged for 10 min at 5,000 xg. The supernatant was removed and the pellet was resuspended in 8 mL of sterile Dl water containing 0.01 % Tween® 80. An aliquot (4.75 mL) of the concentrated spore preparation was removed and mixed with 0.25 mL of fetal bovine serum (final concentration of 5 wt%) to produce the inoculum.

The test coupons were washed with detergent and rinsed with water. The coupons were then rinsed in 70 wt% ethanol and allowed to air dry in a Petri dish containing sterile Whatman 2 filter paper. Right before use, the coupons were sprayed with 70 wt% ethanol and allowed to dry. The liquid coating formulation to be tested was separately applied in 0.05 mL volumes and spread to coat most of the coupon. The coupons were then dried for 24 hours at room temperature (25°C) at 50% relative humidity (RH). Control surfaces were untreated coupons handled under the same conditions as the coupons treated with the coating compositions.

Ten microliters of the inoculum was applied to each coupon in 30 aliquots, making sure that each aliquot was in contact with the dry coating, if present. The inoculum was exposed to the coupons for the specified contact time at room temperature and 50% RH. After a given contact time, each coupon was placed in 20 mL of D/E neutralizing broth and sonicated for 10 seconds. The broth tubes were then incubated for 4 minutes on an incubator shaker at 250 rpm. An aliquot (0.1 mL) was removed from each broth tube and serially diluted in sterile phosphate buffer. An aliquot (0.1 mL) was removed from each dilution and broth tube and plated on PDA. The PDA plates were incubated at room temperature for 4 days and counted. Each combination of inoculum, contact time, and coating treatment was tested in triplicate. As a control, coupons without a coating were also inoculated and processed as described above. Based on plate counts of the appropriate dilution, the concentration of viable fungal spores was determined. This number was multiplied by 20 to determine the CFU/carrier. The CFU/carrier values were converted to base-10 log numbers and the means calculated from the three replicates. Log reductions were determined by subtracting the mean log (CFU/carrier) for the treated samples from the mean log (CFU/carrier) for the control (no treatment) samples held at the same contact time.

To verify the effectiveness of the neutralizing broth, a series of dilutions were prepared from the test inoculum and spread on PDA plates. A 1.0 mL aliquot from the 10⁻⁵ dilution was removed and added to two separate 20 mL DE broth tubes containing a coupon coated with 50 µL of the liquid coating composition. Each broth tube was agitated vigorously with a Vortex mixer and an aliquot (0.1 mL) was removed and spread on a PDA plate. The PDA plates were incubated as described above.

Results are reported as log CFU which indicates the difference of log CFU for inoculated, untreated control coupons and log CFU for coupons treated with the coating compositions according to this disclosure. The log CFU numbers for both control and treated coupons were calculated as the geometric mean of the number of microorganisms surviving on replicate coupons. All log numbers are base-10 logarithms.

### EXAMPLE 1

### COATING COMPOSITIONS COMPRISING CATIONIC RHEOLOGY AGENT

The coating compositions of Table 1 were prepared and used in the subsequent Examples.

A solution of 20 wt% Elvanol® 51-04 in Dl water was first prepared as follows. Dl water (2.4 kg) of 20°C was added to a 4 liter glass vessel (Model CG-1920-05, Chemglass, Vineland, NJ, USA) equipped with a glass lid, 4-blade glass overhead impeller and electric heating mantle (Model CG-10007-18, Chemglass) with temperature controller and a thermocouple that was immersed into the liquid. The impeller was attached to an electric motor that was set to a speed of 880 rpm. Elvanol® 51-04 powder (0.6 kg) was slowly added to the water through a funnel over a 1 minute period. After completed addition of the powder, the temperature was increased to 50°C over a 30 minute period by setting the temperature controller to a set point of 50°C. The mixture was stirred for an additional 30 minutes at 50°C after which at least about 98% of the added powder had dissolved. The mixing and heating was stopped and the liquid was filtered through two layers of cheesecloth (VWR International, West Chester, PA, USA) using a Büchner funnel.

Dl water (463.4 g) was added to a 1 liter high-density polyethylene bottle (Nalgene® model no.2104-0032, Nalge Inc., Rochester, NY, USA). Surfynol® MD-20 (2.0 g) was added and mixed well by shaking. Envirogem® 360 (5.0 g) was then added to the mixture and shaken well. Biosoft® N25-7 (0.1 g) was added and the mixture was shaken well. PEG-300 (10.0 g) was then added and the mixture was shaken well. BTC®885 (3.0 g) was added and the mixture was again shaken well. Liquitint® Patent Blue (0.5 g) was then added and the mixture was shaken until the color was uniform. Elvanol® 51-04 solution (500 g) as prepared above was then added to the mixture and shaken well. Finally, Rheovis® FRC (16.0 g) was added to the mixture and shaken very well to insure complete mixing.

Similar coating compositions as described above were also made using the same process as described above but using different amounts of ingredients; Table 1 shows the compositions used in subsequent Examples.

**TABLE 1**

| Coating compositions comprising cationic rheology agent | | | | |
|---|---|---|---|---|
| | | Concentration (wt%) | | |
| Ingredients | Coating composition #286 | Coating composition #290 | Coating composition #319 | Coating composition #701 |
| Elvanol® 51-04 (20 wt%) | 50 | 50 | 35 | 50 |
| Envirogem® 360 | 0.5 | 0.5 | 0.6 | 0.5 |
| Biosoft® N25-7 | 0.01 | 0.01 | 0.01 | 0.01 |
| Surfynol® MD-20 | 0.2 | 0.2 | 0.3 | 0.2 |
| BTC®885 | 0.3 | 0.3 | 0.3 | 0.3 |
| PEG-300 | 1.0 | 1.0 | 1.0 | 1.0 |
| Rheovis® FRC | 1.6 | 1.6 | 0.3 | 0.25 |
| Liquitint® Patent Blue | - | 0.05 | 0.05 | 0.05 |
| Dl water | rem | rem | rem | rem |

| | | | | |
|---|---|---|---|---|
| "rem" indicates "remainder to 100 wt%" | | | | |

### EXAMPLE 2

### COMPARATIVE COATING COMPOSITIONS COMPRISING AN ACID ACTIVATED RHEOLOGY AGENT

A coating composition comprising an acid-activated rheology agent and to be used as a comparison with compositions of the instant invention (disclosed in subsequent Examples) was prepared as follows.

A stainless steel tank (type SS316) that was equipped with a dual-blade impeller and two external band heaters was used to manufacture the removable antimicrobial coating composition #248. The clean tank was loaded with 15.59 kg of water at 20°C. The dual blade mixer was started at a speed of 200 rpm to provide a significant vortex equal to half of vessel depth. Surfynol® MD20 (156 grams) was added followed by 3.74 kg of Elvanol® 51-04 at a rate of 0.5 kg per minute. The mixture was agitated for 10 minutes before turning on the band heaters. The mixture temperature was monitored via the digital temperature sensor. The mixture was heated until the temperature sensor reached 65-67°C. The heaters were turned off and the temperature was allowed to drop to 55°C over 40 minutes. Water (8.8 kg, 7°C) was added followed by 155.9 grams of the Envirogem®360, and 311.7 grams of PEG-300. To this mixture, 93.5 grams of the BTC®885 was added followed by 6.3 of a 5 wt% solution of FD&C Blue No. 1. The acid-swellable rheology agent Alcogum® L-520 was mixed well and then 2182 grams of it was added to the mixture. The pH of the mixture was 7.1. Then, a 10 wt% acetic acid solution was added until the pH had reached 5.5. The pH was monitored using a pH meter (Model SP70P, VWR International, West Chester, PA, USA). After the addition of the acid the mixture thickened quickly. The mixture was filtered using filter bags with 100 micrometer pore size and stored in high-density polyethylene pails.

Similar coating compositions as described above were also made using the same process as described above but different amounts of ingredients and/or different type of acid to activate the rheology agent. Table 2 shows these compositions used in subsequent Examples.

**TABLE 2**

| Coating compositions comprising an acid-activated rheology agent | | | |
|---|---|---|---|
| Concentration (wt%) | | | |
| Ingredient | Comparative Coating composition #248 | Comparative Coating composition #261 | Comparative Coating composition #271 |
| Elvanol® 51-04 | 12 | 12 | 10 |
| Envirogem® 360 | 0.5 | 0. 5 | 0.5 |
| Biosoft® N25-7 | - | - | 0.01 |
| Surfynol® MD-20 | 0.5 | 0.5 | 0.2 |
| BTC® 885 | 0.3 | 0.3 | 0.3 |
| PEG-300 | 1.0 | 1.0 | 1.0 |
| Alcogum® L-520 | 7.0 | 6.0 | 6.0 |
| Acetic acid | 0.18 | - | - |
| Lactic acid | - | 0.20 | - |
| Glycolic acid | - | - | 0.25 |
| FD&C Blue No. 1 | 0.01 | 0.01 | 0.01 |
| Water | rem | rem | rem |

| | | | |
|---|---|---|---|
| "rem" indicates "remainder to 100 wt%" | | | |

### EXAMPLE 3

### APPEARANCE OF SURFACES AFTER REMOVAL OF COATING COMPOSITIONS COMPRISING BOTH ACID-ACTIVATED AND CATIONIC RHEOLOGY AGENTS

The appearance of surfaces, coated with both acid-activated and cationic coating compositions, after removal of the coating using a tap water rinse was studied. Both aluminum and polycarbonate (Lexan® type 141 R-701-BLK, dimensions 305 mm x 102 mm x 3.2 mm, General Electric Co. , Fairfield, CT, USA) panels were used as surfaces to be coated. The panels were first coated with the liquid coating compositions using a wet film applicator (203 µm film depth, model AP-15SS, Paul N. Gardner Co. Inc., Pompano Beach, FL, USA). The coatings were then allowed to dry in air for at least 24 hours. The dry coatings were washed off by rinsing with tap water of about 25°C. The panels were again allowed to dry in air and the appearance of the panels was analyzed for residues by eye and results are summarized in Table 3. Whereas coating composition #248 left a clearly visible dull residue after the rinse on both surface materials tested, coating compositions #271 produced a reduced by still noticeable residue. In contrast, the inventive compositions #286 and #290 left no noticeable residue on the surfaces tested.

**TABLE 3**

| Appearance after coating removal by water rinse | | | |
|---|---|---|---|
| Coating composition | Example | Appearance of surface after removal of coating | |
| | | Aluminum panel | Polycarbonate panel |
| #248 | Comparative | Clearly visible, dull residue | Clearly visible, dull residue |
| #271 | Comparative | Slight, hardly visible residue | Slight, hardly visible residue |
| #286 | Inventive | No visible residue | No visible residue |
| #290 | Inventive | No visible residue | No visible residue |

### EXAMPLE 4

### SPRAY APPLICATION USING BACKPACK SPRAY SYSTEM

Coating composition #701 of Example 1 was filled in a backpack spray system (SP Professional Backpack Sprayer, Model SP0, SP Systems LLC, Santa Monica, CA, USA) equipped with a type AG03 spray nozzle. The backpack sprayer was pressurized to between 0.7 and 1.0 MPa using the integrated pump lever. A triangular fan with a fan opening angle of about 80 degrees was achieved. This allows the efficient and fast coverage of a spray zone of about 0.5 m width using a spray distance between spray nozzle and target surface of about 0.3 m. Excellent coverage (99-100%) without visible coating defects was achieved.

The antimicrobial activity of coating composition #701 was tested using the NFC test with S. *aureus* ATCC #6538. After a contact time of 5 minutes complete elimination of colony-forming units was achieved, equivalent to log CFU > 6.2.

### EXAMPLE 5

### SPRAY APPLICATION USING AEROSOL SPRAY CAN

Formulation #319 (204 g) of Example 1 was filled into aerosol spray cans of about 0.21 L volume together with a propellant (8.1 g). The propellant was a mixture of 1,1,1,2-Tetrafluoroethane and nitrogen gas in the ratio of 67:1 by mass. The pressure after filling was about 0.97 MPa.

A conical fan pattern with a fan opening angle of about 30 degrees was achieved. This allows the efficient and fast coverage of a spray zone of about 15 cm width using a spray distance between spray nozzle and target surface of about 30 cm. Excellent coverage (99-100%) without visible coating defects was achieved. The coating composition was applied to both vertically and horizontally oriented aluminum panels and allowed to dry in air in the respective orientation. The thickness of the dry coating for the vertical orientation was between 2 and 5 µm; the thickness of the dry coating for the horizontal orientation was between 3 and 8 µm.

### EXAMPLE 6

### SPRAY APPLICATION OF COATING COMPOSITION USING AIRLESS SPRAY EQUIPMENT

Coating compositions #286 and #290 were applied to surfaces by spraying using an airless spray system (model President 46/1 SST, Graco Inc., Minneapolis, MN, USA). The supply air pressure was set to between 0.55 and 0.65 MPa using a pressure regulator which provides a spray pressure of about between 25 to 30 MPa. A spray gun (model XTR 502, Graco) with a 0.9 meter extension pole (model# 287023, Graco) and equipped with a wide-angle spray tip (model 711, Graco) was used. The coating compositions were sprayed at temperatures between about 10°C and 25°C. A fan width between 55 and 70 cm at a spray distance of about 0.35 m was provided under the selected conditions, corresponding to favorable spray opening angles between 75 and 90 degrees. Excellent sprayability characteristics were achieved, such as efficient atomization, complete coverage and low tendency to sag or drip off vertical or inclined surfaces. The sag point is defined as the thickness of the coating after spraying on a vertical surface and drying at which the coatings starts to show visual sags or drips. The sag point was measured to be about 7.0 µm at 20°C and 7.5 µm at 10°C for coating compositions #286 and #290 indicating a high resistance to sagging and dripping.

The application speed of the coating composition was measured to be about 8 to 15 m²/min depending on the speed of moving the spray gun across the surface to be sprayed. The consumption of the coating composition was between about 30 and 60 g/m², again depending on the speed of moving the spray gun across the target surface.

The coating compositions were applied to a variety of surfaces, such as aluminum panels, epoxy-coated aluminum panels, stainless steel, polycarbonate panels, polymethyl methacrylate panels, ceramic tile and concrete. The resulting coatings after drying had excellent appearances characterized by the absence of coating defects such as sags, foam or bubbles, craters or uncovered areas. The average film thickness of 15 repeat measurements was 5.8 and 5.5 micrometers for coating composition #286 and #290, respectively.

### EXAMPLE 7

### STABILITY OF COATING COMPOSITION #286 UNDER FREEZE-THAW CONDITIONS

Coating compositions #286 was subjected to a freeze-thaw stability test to assess the long-term stability upon temperature change to predict the behavior of the composition upon unintended freezing in storage or during transport. The composition was subjected to 3 freeze-thaw cycles, wherein each freeze-thaw cycle was characterized by storing the composition at -20 to -16°C for 24 hours followed by storing the composition at +20 to +25°C for 24 hours. The sag point was measured for coating composition #286 with and without the freeze-thaw treatment and was found to be identical (7.0 µm) underlining good freeze-thaw stability of coating composition #286.

### EXAMPLE 8

### SHORT-TERM ANTIMICROBIAL PROPERTIES

The coating compositions #286 and #290 of Example 1 were tested for short-term antimicrobial activity using the NFC method described above. The NFC method assesses the antimicrobial activity of the coating composition while it is still liquid. The test microorganisms used were *Escherichia coli* 0157:H7, *Salmonella enterica* ATCC 10708, *Staphylococcus aureus* ATCC 6358 and *Klebsiella pneumoniae* ATCC 4352. As shown in Table 4, both coating compositions provided at least a 4.8 log CFU reduction for all microorganisms tested, equivalent to reduction of the CFU number by at least 99.998%.

**TABLE 4**

| Short-term antimicrobial properties according to NFC method | | | | |
|---|---|---|---|---|
| Coating composition | Test method | Test microorganism | Contact time | Log CFU |
| #286 | NFC | *E. coli* 0157:H7 | 5 min | 6.0 |
| #286 | NFC | *S. enterica* | 5 min | 6.4 |
| #286 | NFC | *S. aureus* | 5 min | 6.9 |
| #286 | NFC | *K. pneumoniae* | 5 min | 6.4 |
| #290 | NFC | *E. coli* 0157:H7 | 5 min | 4.8 |
| #290 | NFC | *S. enterica* | 5 min | 6.4 |
| #290 | NFC | *S. aureus* | 5 min | 6.9 |
| #290 | NFC | *K. pneumoniae* | 5 min | 6.4 |

### EXAMPLE 9

### RESIDUAL ANTIMICROBIAL ACTIVITY

The coating compositions #286 and #290 of Example 1 were tested using the residual self-sanitizing (RSS) test method described above. The RSS method assesses the antimicrobial activity of the coating composition after it has dried on a surface. The test microorganisms used *Staphylococcus aureus* ATCC 6358 and *Klebsiella pneumoniae* ATCC 4352. As shown in Table 5, a more than 5.3 log CFU reduction was achieved by both coating compositions within a contact time of 5 minutes for the microorganisms tested.

Coating composition #290 was also subjected to an accelerated aging treatment by keeping the composition at a temperature of 50°C for 14 days. The antimicrobial activity according to the RSS method of the composition after that aging treatment was identical to the activity of the composition that was not subjected to the aging treatment, which underlines good stability of the composition.

**TABLE 5**

| Residual antimicrobial activity according to RSS method of coating composition #286 | | | | | |
|---|---|---|---|---|---|
| Coating composition | Aging treatment | Test method | Test microorganism | Contact time | Log CFU |
| #286 | None | RSS | *K. pneumoniae* | 5 min | 6.1 |
| #286 | None | RSS | *S. aureus* | 5 min | 5.9 |
| #290 | None | RSS | *K. pneumoniae* | 5 min | 5.3 |
| #290 | None | RSS | *S. aureus* | 5 min | 5.6 |
| #290 | 14 days at 50°C | RSS | *S*. *aureus* | 5 min | 5.3 |
| #290 | 14 days at 50°C | RSS | *K. pneumoniae* | 5 min | 5.6 |

### EXAMPLE 10

### RHEOLOGICAL PROPERTIES OF COATING COMPOSITIONS COMPRISING CATIONIC RHEOLOGY AGENT

The rheological properties of the liquid antimicrobial formulations were assessed using a Bohlin Gemini controlled-stress rheometer (Malvern Instruments Ltd., Worcestershire, UK). The instrument was equipped with a peltier heating system and a 40 mm parallel plate with smooth surfaces. The distance between the plates, called the "gap" was adjusted to 0.150 mm. The system was set at the desired test temperature. Less than 1 mL of sample was added to the peltier plate. The upper parallel plate was lowered to the desired gap. The excess material was first removed with a pipette and then the straight edge of a piece of plastic was used to cleanly trim the sample around the parallel plate. The sample was pre-sheared for 30 seconds at a shear rate of 2000 S⁻¹ and then allowed to recover while the instrument reached the temperature set point. A shear rate sweep was performed from 0.03 s⁻¹ to 30,000 S⁻¹ over the course of 400 seconds.

The viscosities of coating composition #286 of Example 1 at varying shear rates at two temperatures are given in Table 6. The data shows a decrease in viscosity with increasing shear rate for both temperatures examined, highlighting the pseudoplastic properties of the coating composition.

**TABLE 6**

| Viscosity of coating composition #286 at various temperatures and shear rates | | |
|---|---|---|
| Shear rate (S⁻¹) | Temperature (°C) | Viscosity (Pa.s) |
| 1 | 25 | 8.91 |
| 10 | 25 | 2.91 |
| 100 | 25 | 0.97 |
| 1000 | 25 | 0.15 |
| 1 | 10 | 10.4 |
| 10 | 10 | 3.16 |
| 100 | 10 | 0.95 |
| 1000 | 10 | 0.35 |

### EXAMPLE 11

### SHEAR-THINNING INDEX OF COATING COMPOSITIONS COMPRISING CATIONIC RHEOLOGY AGENT

The "pseudoplastic index" or "shear-thinning index" (STI) provides an indication of the resistance of the composition to sagging and dripping. A common measurement determines the viscosity at two different shear rates such as 1 S⁻¹ and 10 S⁻¹. The value recorded at the lower shear rate is divided by the value at the higher shear rate obtain the STI. Generally, the higher the STI, the higher the resistance to sagging and dripping the coating material will have.

The shear-thinning index (STI) was calculated by dividing the viscosity measured at 1 s⁻¹ by the viscosity measured at 10 s⁻¹. The STI values for coating composition #286 of Example 1 are given in Table 7. As can be seen from the table, the STI values in the temperature range between 10°C and 25°C are between about 3.0 and 3.3 which provides a high enough shear-thinning index to achieve a non-dripping and non-sagging film after application to a vertical surface, e.g., after spray application.

It is also worth noting that the shear-thinning index increases by lowering the temperature of the coating composition. This is of advantage for applications where the coating compositions will be used in cold environments such as food processing plants, cold rooms, etc., in which the coating composition will be even more resistant to sagging and dripping.

**TABLE 7**

| Shear-thinning index of coating composition #286 | | | |
|---|---|---|---|
| Temperature (°C) | Viscosity at 1 s⁻¹ (Pa·s) | Viscosity at 10 s⁻¹ (Pa·s) | STI |
| 25 | 8.91 | 2.91 | 3.06 |
| 10 | 10.4 | 3.16 | 3.29 |

### EXAMPLE 12

### STUDY OF SURFACE RESIDUES AFTER COATING REMOVAL

To study the presence and the degree of visible surface residues after the intentional removal of removable antimicrobial coatings, the following experiments were conducted. Liquid coating compositions #271 (comparative) and #286 (inventive) were applied to aluminum panels using a wet film applicator (203 µm film depth, model AP-15SS, Paul N. Gardner Co. Inc., Pompano Beach, FL, USA). The wet films were then allowed to dry in air for at least 12 hours. The dry coatings were evenly sprayed with the liquids listed in Table 8 using a spray bottle (Model no. 23609-182, VWR International, West Chester, PA, USA) or left unsprayed as a control. The sprayed coatings were allowed to re-dry for at least 3 hours. The dry coatings were then washed off by rinsing with tap water of about 25°C. The water-wet panels were again allowed to dry in air for at least 3 hours and the appearance of the panels was analyzed for residues by eye. The results are summarized in Table 8.

The removable antimicrobial coating compositions comprising acid-activated rheology agents (such as coating formulation #271 of Example 2) may leave clearly visible residues on the surface when the dry coating formed from said coating composition comes into contact with liquids before the actual removal step of the coating. The degree of the residue depended on the composition of the liquid coming into contact with the coating. Base-containing liquids caused a heavier residue when compared to liquids of neutral pH, which in turn caused a heavier residue when compared to acidic liquids. In contrast, coating composition according to this invention did not leave a residue under any of the tested conditions.

**TABLE 8**

| Surface residues after (i) generating a dry coating, (ii) contacting dry coatings with certain liquids, (iii) re-drying the coating and (iv) removal of the coating | | |
|---|---|---|
| Liquid in contact with coating | Visual residue after coating removal | |
| | Coating composition #271 (Comparative example) | Coating composition #286 (Inventive example) |
| Sodium hydroxide solution (0.05 mol/L) in Dl water | Clearly visible, heavy residue | No residue |
| Dl Water | Visible residue (less than above) | No residue |
| Acetic acid solution (0.14 mol/L) in Dl water | Slight but visible residue (less than above) | No residue |
| No liquid applied before removal (Control experiment) | Slight, hardly visible residue | No residue |

## Claims

1. A removable antimicrobial coating composition comprising:
i. a water soluble or water-dispersible film-forming agent;
ii. at least one cationic or nonionic antimicrobial agent;
iii. an aqueous solvent; and
iv. a rheology agent comprising
a) a functional group of a structure 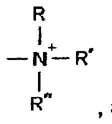 and in particular
b) an acrylic polymer comprising functional groups of a structure chosen from 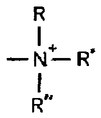 or 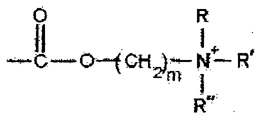
wherein each of R, R' and R" is independently either an alkyl or aryl group, or a combination thereof, and wherein m is 1 to 5.

2. The composition of claim 1, wherein said film-forming agent comprises poly(vinyl alcohol) or copolymers thereof.

3. The composition of claims 1-2, wherein said antimicrobial agent comprises a quaternary ammonium compound.

4. The composition of claims 1-3, wherein said antimicrobial coating composition further comprises: a first surfactant at a concentration from 0.01 to 2 wt% of said antimicrobial coating composition, and a second surfactant at a concentration from 0.001 to 0.2 wt% of said antimicrobial coating composition; wherein said first surfactant is nonionic and said second surfactant comprises an alcohol ethoxylate.

5. A method of providing control of microorganisms at a locus comprising the steps:
a) combining:
i) a water soluble or water-dispersible film-forming agent;
ii) at least one antimicrobial agent;
iii) an aqueous solvent;
iv) a rheology agent comprising
a) a functional group of a structure 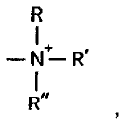 and in particular
b) an acrylic polymer comprising functional groups of a structure chosen from 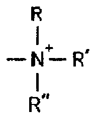 or 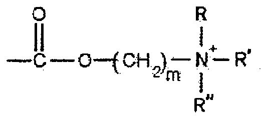 wherein each of R, R' and R" is independently either an alkyl or aryl group, or a combination thereof, and wherein m is 1 to 5; to obtain a shear-thinning removable coating composition;
b) applying said coating composition to said locus,
and wherein said coating composition is allowed to form a dry coating after application upon said locus.

6. The method of claim 5, wherein said locus comprises at least one surface of the article comprising a material selected from the group consisting of: metals, minerals, natural and synthetic polymers, plastics, brick, tile, ceramic, porcelain, vinyl, glass, linoleum and wood.

7. The method of claim 5 further comprising removing said dry coating by application of an aqueous solution onto said dry coating.

## Patentansprüche

1. Ablösbare antimikrobielle Beschichtungszusammensetzung umfassend:
i. ein wasserlösliches oder wasserdispergierbares, filmbildendes Mittel;
ii. mindestens ein kationisches oder nichtionisches antimikrobielles Mittel;
iii. ein wässriges Lösungsmittel; und
iv. ein Rheologiemittel umfassend
a) eine funktionelle Gruppe einer Struktur 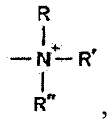 und insbesondere
b) ein Acrylpolymer umfassend funktionelle Gruppen einer Struktur, die ausgewählt ist aus 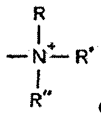 oder 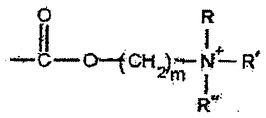
wobei jedes von R, R' und R" unabhängig entweder eine Alkyl- oder Arylgruppe oder eine Kombination davon ist und wobei m 1 bis 5 beträgt.

2. Zusammensetzung nach Anspruch 1, wobei das filmbildende Mittel Poly(vinylalkohol) oder Copolymere davon umfasst.

3. Zusammensetzung nach den Ansprüchen 1 - 2, wobei das antimikrobielle Mittel eine quartäre Ammoniumverbindung umfasst.

4. Zusammensetzung nach den Ansprüchen 1 - 3, wobei die antimikrobielle Beschichtungszusammensetzung des Weiteren Folgendes umfasst: ein erstes Tensid in einer Konzentration von 0,01 bis 2 Gew.-%, auf die antimikrobielle Beschichtungszusammensetzung bezogen, und ein zweites Tensid in einer Konzentration von 0,001 bis 0,2 Gew.-%, auf die antimikrobielle Beschichtungszusammensetzung bezogen;
wobei das erste Tensid nichtionisch ist und das zweite Tensid ein Alkoholethoxylat umfasst.

5. Verfahren zum Ermöglichen der Bekämpfung von Mikroorganismen an einem Ort, umfassend die Schritte:
a) Kombinieren:
i. eines wasserlöslichen oder wasserdispergierbaren, filmbildenden Mittels;
ii. mindestens eines antimikrobiellen Mittels;
iii. eines wässrigen Lösungsmittels;
iv. eines Rheologiemittels umfassend
a) eine funktionelle Gruppe einer Struktur 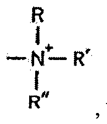 und insbesondere
b) ein Acrylpolymer umfassend funktionelle Gruppen einer Struktur, die ausgewählt ist aus 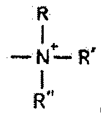 oder 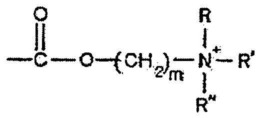 wobei jedes von R, R' und R" unabhängig entweder eine Alkyl- oder Arylgruppe oder eine Kombination davon ist und wobei m 1 bis 5 beträgt;
um eine unter Scherspannung verdünnende, ablösbare Beschichtungszusammensetzung zu erhalten;
b) Aufbringen der Beschichtungszusammensetzung auf den Ort,
und wobei man die Beschichtungszusammensetzung nach Aufbringen auf den Ort eine trockene Beschichtung bilden lässt.

6. Verfahren nach Anspruch 5, wobei der Ort mindestens eine Oberfläche des Artikels umfasst, der ein Material umfasst ausgewählt aus der Gruppe bestehend aus: Metallen, Mineralien, natürlichen und synthetischen Polymeren, Kunststoffen, Backstein, Fliese, Keramik, Porzellan, Vinyl, Glas, Linoleum und Holz.

7. Verfahren nach Anspruch 5, des Weiteren das Ablösen der trockenen Beschichtung durch Aufbringen einer wässrigen Lösung auf die trockene Beschichtung umfassend.

## Revendications

1. Composition de revêtement antimicrobienne pouvant être retirée comprenant:
i. un agent formant film soluble dans l'eau ou pouvant être dispersé dans l'eau;
ii. au moins un agent antimicrobien cationique ou non ionique;
iii. un solvant aqueux; et
iv. un agent de contrôle de la rhéologie comprenant
a) un groupe fonctionnel d'une structure 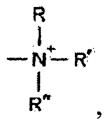 et en particulier b) un polymère acrylique comprenant des groupes fonctionnels d'une structure choisie parmi 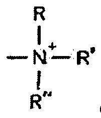 ou 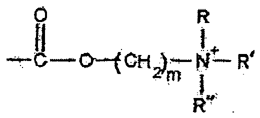 dans lesquelles chacun de R, R' et R" est indépendamment soit un groupe alkyle ou aryle, soit leur combinaison, et dans lesquelles m a une valeur allant de 1 à 5.

2. Composition selon la revendication 1, dans laquelle ledit agent formant film comprend du poly(alcool de vinyle) ou leurs copolymères.

3. Composition selon les revendications 1 à 2, dans laquelle ledit agent antimicrobien comprend un composé d'ammonium quaternaire.

4. Composition selon les revendications 1 à 3, dans laquelle ladite composition de revêtement antimicrobienne comprend en outre: un premier tensioactif à une concentration allant de 0,01 à 2 % en pds de ladite composition de revêtement antimicrobienne, et un second tensioactif à une concentration allant de 0,001 à 0,2 % en pds de ladite composition de revêtement antimicrobienne ;
dans laquelle ledit premier tensioactif est non ionique et ledit second tensioactif comprend un éthoxylate d'alcool.

5. Procédé de fourniture du contrôle des micro-organismes à un lieu comprenant les étapes:
a) de combinaison:
i. d'un agent formant film soluble dans l'eau ou pouvant être dispersé dans l'eau;
ii. d'au moins un agent antimicrobien;
iii. d'un solvant aqueux;
iv. d'un agent de contrôle de la rhéologie comprenant
a) un groupe fonctionnel d'une structure 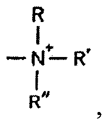 et en particulier
b) un polymère acrylique comprenant des groupes fonctionnels d'une structure choisie parmi 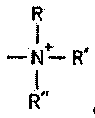 ou 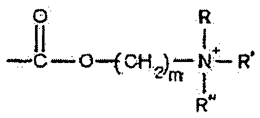 dans lesquelles chacun de R, R' et R" est indépendamment soit un groupe alkyle ou aryle, soit leur combinaison, et dans lesquelles m a une valeur allant de 1 à 5;
pour obtenir une composition de revêtement pouvant être retirée, fluidifiable par cisaillement;
b) d'application de ladite composition de revêtement audit lieu,
et dans laquelle ladite composition de revêtement est laissée à former un revêtement sec après application audit lieu.

6. Procédé selon la revendication 5, dans lequel ledit lieu comprend au moins une surface de l'article comprenant un matériau sélectionné parmi le groupe constitué: des métaux, des minéraux, des polymères d'origine naturelle et synthétiques, des matières plastiques, de la brique, de la tuile, de la céramique, de la porcelaine, du vinyle, du verre, du linoléum et du bois.

7. Procédé selon la revendication 5, comprenant en outre l'élimination dudit revêtement sec par l'application d'une solution aqueuse sur ledit revêtement sec.
